# EUROPÄISCHE PATENTSCHRIFT

(11) **EP 1 003 808 B1**
(45) Veröffentlichungstag und Bekanntmachung des Hinweises auf die Patenterteilung: **08.05.2002**
(21) Anmeldenummer: 98943796.7
(22) Anmeldetag: 29.07.1998
(51) Int. Cl.: C08K 5/523, C08L 69/00

(54) **FLAMMWIDRIGE WÄRMEFORMBESTÄNDIGE POLYCARBONAT-ABS-FORMMASSEN**
FLAME-RESISTANT THERMOSTABLE POLYCARBONATE ABS MOULDING MATERIALS
MATIERES MOULABLES EN POLYCARBONATE ABS RESISTANTES A LA FLAMME ET DE STABILITE DIMENSIONNELLE A LA CHALEUR

(30) Priorität: 11.08.1997 DE 19734663
(43) Veröffentlichungstag der Anmeldung: 31.05.2000
(73) Patentinhaber: Bayer Aktiengesellschaft, 51368 Leverkusen (DE)
(72) Erfinder: ECKEL, Thomas, D-41540 Dormagen (DE); WITTMANN, Dieter, D-51375 Leverkusen (DE); ZOBEL, Michael, D-40547 Düsseldorf (DE); ALBERTS, Heinrich, D-51519 Odenthal (DE)
(86) Internationale Anmeldenummer: EP9804733
(87) Internationale Veröffentlichungsnummer: WO9907779

(56) Entgegenhaltungen:
- EP-A- 0 640 655
- EP-A- 0 731 140
- EP-A- 0 761 746
- EP-A- 0 771 851
- PATENT ABSTRACTS OF JAPAN vol. 009, no. 059 (C-270), 15. März 1985 & JP 59 193920 A (NIPPON ESTER KK), 2. November 1984 -& JP 59 193920 A (NIPPPON ESTER KK)

## Beschreibung

Die vorliegende Erfindung betrifft mit Phosphorverbindungen flammwidrig ausgerüstete Polycarbonat-ABS-Formmassen, die ein ausgezeichnetes mechanisches Eigenschaftsniveau, insbesondere eine hohe Wärmeformbeständigkeit, aufweisen.

In EP-A 0 640 655 werden Formmassen aus aromatischem Polycarbonat, styrolhaltigen Copolymerisaten und Pfropfpolymerisaten beschrieben, die mit monomeren und/oder oligomeren Phosphorverbindungen flammwidrig ausgerüstet werden können.

In EP-A-0363608 werden flammwidrige Polymermischungen aus aromatischem Polycarbonat, styrolhaltigem Copolymer oder Pfropfcopolymer sowie oligomeren Phosphaten als Flammschutzadditive beschrieben. Für manche Anwendungen, wie beispielsweise Formteile im Inneren von Gehäuseteilen, ist die Wärmeformbeständigkeit dieser Mischungen oft nicht ausreichend.

Aufgabe der vorliegenden Erfindung ist daher, flammwidrige Polycarbonat-ABS-Formmassen herzustellen, die eine ausgezeichnete Wärmeformbeständigkeit neben der erforderlichen hohen Flammwidrigkeit aufweisen.

Es wurde nun überraschenderweise gefunden, daß durch den Einsatz der erfindungsgemäßen Mono- und/oder Oligophosphorverbindungen flammwidrige Formmassen erhalten werden, die Formkörpern mit einem sehr guten mechanischen Eigenschaftsniveau und einer herausragenden Wärmeformbeständigkeit, ergeben.

Gegenstand der vorliegenden Erfindung sind daher flammwidrige thermoplastische Formmassen enthaltend
A) 5 bis 95, vorzugsweise 10 bis 90 Gew.-Teile, besonders bevorzugt 20 bis 80 Gew.-Teile aromatisches Polycarbonat oder Polyestercarbonat
B) 1 bis 60, vorzugsweise 1 bis 40 Gew.-Teile, besonders bevorzugt 2 bis 30 Gew.-Teile, wenigstens eines Pfropfpolymerisats von
   - B.1: 5 bis 95, vorzugsweise 20 bis 60 Gew.-% einem oder mehreren Vinylmonomeren auf
   - B.2: 5 bis 95, vorzugsweise 40 bis 80 Gew.-% einem oder mehreren Pfropfgrundlagen mit einer Glasumwandlungstemperatur < 10°C, vorzugsweise 0°C, besonders bevorzugt < -20°C und einer mittleren Teilchengröße (d₅₀-Wert) von 0,05 bis 5 µm, vorzugsweise 0,20 bis 0,35 µm, besonders bevorzugt 0,25 bis 0,30 µm,
C) 0 bis 50, vorzugsweise 1 bis 30, besonders bevorzugt 2 bis 25, Gew.-Teile thermoplastisches Vinyl(co)polymerisat
D) 0,5 bis 20 Gew.-Teile, vorzugsweise 1 bis 18 Gew.-Teile, besonders bevorzugt 2 bis 15 Gew.-Teile, wenigstens einer Phosphorverbindung der allgemeinen Formel (I) 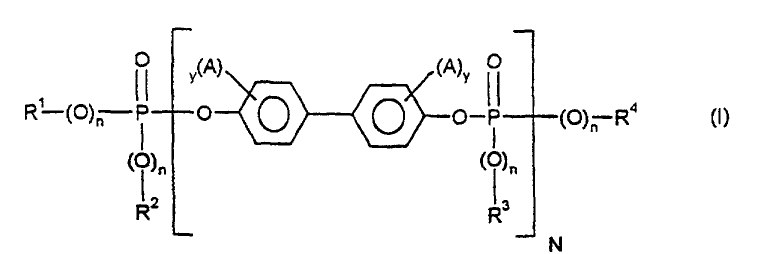 worin
   - A: unabhängig voneinander, Halogen, vorzugsweise Chlor und/oder Brom, C₁-C₈-Alkyl, vorzugsweise C₁-C₄-Alkyl, insbesondere Methyl, C₆-C₁₀-Aryl, vorzugsweise Phenyl, C₇-C₁₂-Aralkyl, vorzugsweise Phenyl-C₁-C₄-Alkyl, insbesondere Benzyl,
   - R¹, R², R³ und R⁴,: unabhängig voneinander, gegebenenfalls halogeniertes C₁-C₈-Alkyl, jeweils gegebenenfalls durch Halogen und/oder C₁-C₄-Alkyl substituiertes C₅-C₆-Cycloalkyl, C₆-C₂₀-Aryl oder C₇-C₁₂-Aralkyl,
   - y: jeweils unabhängig voneinander 0, 1, 2, 3 oder 4,
   - n: unabhängig voneinander 0 oder 1, vorzugsweise 1,
   - N: 0,3 bis 30 bedeuten
   und gegebenenfalls weitere(n) Phosphorverbindung(en) der nachstehenden Formel II 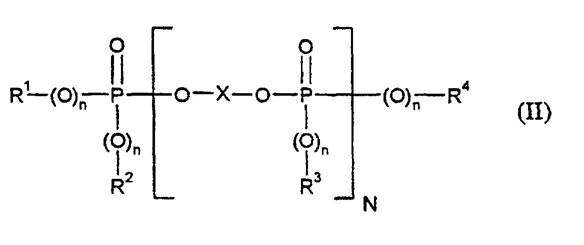 in der die Reste R¹, R², R³, R⁴, n und N die oben angegebene Bedeutung haben und
   - x: für einen ein- oder mehrkernigen aromatischen Rest mit 6 bis 30 C-Atomen mit Ausnahme von Diphenyl steht,
E) 0,05 bis 5 Gew.-Teile, vorzugsweise 0,1 bis 1 Gew.-Teil, besonders bevorzugt 0,1 bis 0,5 Gew.-Teile, fluoriertes Polyolefin
wobei die Summe der Gew.-Teile aller Komponenten A+B+C+D+E 100 ergibt.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964, sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z.B. DE-OS 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (III) 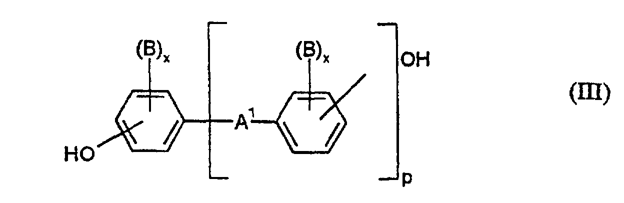 wobei
- A¹: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, welches mit weiteren gegebenenfalls Heteroatome enthaltenden aromatischen Ringen kondensiert sein kann, oder ein Rest der Formel 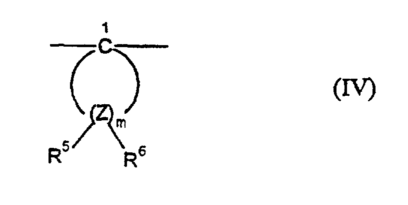 oder ein Rest der Formel (V) 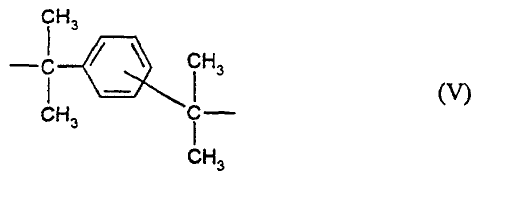
- B: unabhängig voneinander C₁-C₈-Alkyl, vorzugsweise C₁-C₄-Alkyl, insbesondere Methyl, Halogen, vorzugsweise Chlor und/oder Brom, C₆-C₁₀-Aryl, vorzugsweise Phenyl, C₇-C₁₂-Aralkyl, Phenyl-C₁-C₄-Alkyl, vorzugsweise Benzyl,
- x: jeweils unabhängig voneinander 0, 1 oder 2,
- p: 1 oder 0 sind, und
- R⁵ und R⁶: für jedes Z individuell wählbar, unabhängig voneinander, Wasserstoff oder C₁-C₆-Alkyl, vorzugsweise Wasserstoff, Methyl und/oder Ethyl,
- z: Kohlenstoff und
- m: eine ganze Zahl von 4 bis 7, bevorzugt 4 oder 5 bedeuten,
mit der Maßgabe, daß an mindestens einem Atom Z
- R⁵ und R⁶: gleichzeitig Alkyl sind.

Bevorzugte Diphenole sind Hydrochinon, Resorcin, 4,4'-Dihydroxydiphenyl, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α- Bis-(hydroxyphenyl)-diisopropyl-benzole wie deren kernbromierte und/oder kernchlorierte Derivate.

Besonders bevorzugte Diphenole sind 4,4'-Diphenylphenol, Bisphenol-A, 2,4- Bis-(4-hydroxyphenyl)-2-methylbutan, 1,1- Bis-(4-hydroxyphenyl)-cyclohexan, 1,1- Bis-(4-hydroxyphenyl)-3,3,5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis-(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-% und 10 Mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z.B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an ≥ drei-funktionellen Verbindungen, beispielsweise solchen mit ≥ drei phenolischen Gruppen.

Geeignet sind sowohl Homopolycarbonate als auch Copolycarbonate. Zur Herstellung erfindungsgemäßer Copolycarbonate als Komponente A können auch 1 bis 25 Gew.-%, vorzugsweise 2,5 bis 25 Gew.-% (bezogen auf die Gesamtmenge an einzusetzenden Diphenolen), Polydiorganosiloxane mit Hydroxy-aryloxy-Endgruppen eingesetzt werden. Diese sind bekannt (s. beispielsweise aus US-Patent 3 419 634) bzw. nach literaturbekannten Verfahren herstellbar. Die Herstellung Polydiorganosiloxanhaltiger Copolycarbonate wird z.B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere an 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isopthalsäure, Terepthalsäure, Diphenylether-4,4'-dicarbonsäure und der Naphthalin-2,6-dicarbonsäure.

Besonders bevorzugt sind Gemische der Disäuredichloride der Isopthalsäure und der Terepthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können sowie aliphatische C₂-C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und im Falle von Monocarbonsäurechlorid-Kettenabbrechern auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxyphenyl)-cyclohexyl]-propan, 2,4-Bis(4-hydroxyphenyl-isopropyl)-phenol, Tetra-(4-hydroxyphenyl)-methan, 2,6-Bis-(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis-[4,4'-dihydroxytri-phenyl)-methyl]-benzol, in Mengen von 0,01 bis 1,0 Mol-%, bezogen auf eingesetzte Diphenole, verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren.

Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen.

Sowohl die Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polyestercarbonate liegt im Bereich 1,18 bis 1,4, vorzugsweise 1,22 bis 1,3 (gemessen an Lösungen von 0,5 g Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

### Komponente B

Die erfindungsgemäß Komponente B stellt Pfropfpolymerisate dar. Diese umfassen Pfropfcopolymerisate mit kautschukelastischen Eigenschaften, die im wesentlichen aus mindestens 2 der folgenden Monomeren erhältlich sind: Chloropren, Butadien-1,3, Isopropen, Styrol, Acrylnitril, Ethylen, Propylen, Vinylacetat und (Meth)-Acrylsäureester mit 1 bis 18 C-Atomen in der Alkoholkomponente; also Polymerisate, wie sie z.B. in Methoden der Organischen Chemie" (Houben-Weyl), Bd. 14/1, Georg Thieme-Verlag, Stuttgart 1961, S. 393-406 und in C.B. Bucknall, "Thoughened Plastics", Appl. Science Publishers, London 1977, beschrieben sind. Bevorzugte Polymerisate B sind partiell vernetzt und besitzen Gelgehalte von über 20 Gew.-%, vorzugsweise über 40 Gew.-%, insbesondere über 60 Gew.-%.

Bevorzugte Pfropfpolymerisate B umfassen Pfropfpolymerisate aus:
- B.1: 5 bis 95, vorzugsweise 30 bis 80 Gew.-Teile, einer Mischung aus
B.1.1 50 bis 99 Gew.-Teilen Styrol, α-Methylstyrol, halogen- oder methylkernsubstituierten Styrolen, Methylmethacrylat oder Mischungen dieser Verbindungen und
B.1.2 1 bis 50 Gew.-Teilen Acrylnitril, Methacrylnitril, Methylmethacrylat, Maleinsäureanhydrid, C₁-C₄-alkyl-bzw. phenyl-N-substituienen Maleinimiden oder Mischungen dieser Verbindungen auf
- B.2: 5 bis 95, vorzugsweise 20 bis 70 Gew.-Teilen Polymerisat auf Dien- und/oder Alkylacrylat-Basis mit einer Glasübergangstemperatur unter -10°C,

Bevorzugte Pfropfpolymerisate B sind z.B. mit Styrol und/oder Acrylnitril und/oder (Meth)-Acrylsäurealkylestern gepfropfte Grundlagen B.2 wie Polybutadiene, Butadien/Styrol-Copolymerisate und Acrylatkautschuke; d.h. Copolymerisate der in der DE-OS 1 694 173 (=US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol oder Butadien/Acrylnitril-Copolymerisate, Polyisobutene oder Polyisoprene, wie sie z.B. in der DE-OS 2 348 377 (=US-PS 3 919 353) beschrieben sind.

Besonders bevorzugte Polymerisate B sind z.B. ABS-Polymerisate, wie sie z.B. in der DE-OS 2 035 390 (=US-PS 3 644 574) oder in der DE-OS 2 248 242 (=GB-PS 1 409 275) beschrieben sind.

Besonders bevorzugte Pfropfpolymerisate B sind erhältlich durch Pfropfreaktion von
- α: 10 bis 70, vorzugsweise 15 bis 50, insbesondere 20 bis 40 Gew.-%, bezogen auf Pfropfpolymisat B, mindestens eines (Meth)-Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth)-Acrylsäureester und 50 bis 90, vorzugsweise 65 bis 80 Gew.-%, bezogen auf Gemisch, Styrol, als Pfropfauflage B.1 auf.
- β: 30 bis 90, vorzugsweise 50 bis 85, insbesondere 60 bis 80 Gew.-%, bezogen auf Pfropfpolymisat B, eines Butadienpolymerisats mit mindestens 50 Gew.-%, bezogen auf β, Butadienresten als Pfropfgrundlage B.2,
wobei vorzugsweise der Gelanteil der Pfropfgrundlage β mindestens 70 Gew.-% (in Toluol gemessen), der Pfropfgrad G 0,15 bis 0,55 und der mittlere Teilchendurchmesser d₅₀ des Pfropfpolymerisats B.2 0,05 bis 2 µm, vorzugsweise 0,1 bis 0,6 µm beträgt.

(Meth)-Acrylsäureester α sind Ester der Acrylsäure oder Methacrylsäure mit einwertigen Alkoholen mit 1 bis 18 C-Atomen. Besonders bevorzugt sind Methacrylsäuremethylester, -ethylester und -propylester, n-Butylacrylat, t-Butylacrylat und t-Butylmethacrylat.

Die Pfropfgrundlage β kann neben Butadienresten bis zu 50 Gew.-%, bezogen auf β, Reste anderer ethylenisch ungesättigter Monomeren, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage β besteht aus reinem Polybutadien.

Der Pfropfgrad G bezeichnet das Gewichtsverhältnis von aufgepfropften Pfropfmonomeren zur Pfropfgrundlage und ist dimensionslos.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Besonders bevorzugte Polymerisate B sind z.B. auch Pfropfpolymerisate aus
- τ.: 20 bis 90 Gew.-%, bezogen auf Komponente B, Acrylatkautschuk mit einer Glasübergangstemperatur <-20°C als Pfropfgrundlage B.2 und
- δ.: 10 bis 80 Gew.-%, bezogen auf Komponente B, mindestens eines polymerisierbaren, ethylenisch ungesättigten Monomeren als Pfropfmonomere C.1.

Die Acrylatkautschuke τ der Polymerisate B sind vorzugsweise Polymerisate aus Acrylsäurealkylestern, gegebenenfalls mit bis zu 40 Gew.-%, bezogen auf τ, anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethyl-hexylester; Halogenalkylester, vorzugsweise Halogen-C₁-C₈-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugt vernetzende Monomere sind Allylmethacrylat, Ethylenglykoldimethylacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomere beträgt vorzugsweise 0,02 bis 5, insbesondere 0,05 bis 2 Gew.-%, bezogen auf die Pfropfgrundlage τ.

Bei cyclischen vernetzenden Monomeren mit mindestens 3 ethylenisch ungesättigten Gruppen ist es vorteilhaft, die Menge auf unter 1 Gew.-% der Pfropfgrundlage τ zu beschränken.

Bevorzugt "andere" polymerisierbare, ethylenisch ungesättigte Monomere, die neben den Acrylsäureestern gegebenenfalls zur Herstellung der Pfropfgrundlage τ dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage τ sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in DE-OS 3 704 657, DE-OS 3 704 655, DE-OS 3 631 540 und DE-OS 3 631 539 beschrieben werden.

Der Gelgehalt der Pfropfgrundlage B.2 wird bei 25°C in Dimethylformamid bestimmt (M. Hoffmann, H. Krömer, R. Kuhn, Polymeranalytik I und II, Georg Thieme-Verlag, Stuttgart 1977).

Die Pfropfpolymerisate B können nach bekannten Verfahren wie Masse-, Suspensions-, Emulsions- oder Masse-Suspensionsverfahren hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch Polymerisation der Pfropfmonomere in Gegenwart der Pfropfgrundlage gewonnen werden.

Die mittlere Teilchengröße d₅₀ ist der Durchmesser, oberhalb und unterhalb dessen jeweils 50 Gew.-% der Teilchen liegen. Er kann mittels Ultrazentrifigenmessung (W. Scholtan, H. Lange, Kolloid, Z. und Z. Polymere 250 (1972), 782-1796) bestimmt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mitanfallen.

### Komponente C

Die Komponente C umfaßt wenigstens ein thermoplastisches Vinyl(co)polymerisat.

Geeignet sind als (Co)Polymerisate C Polymerisate von mindestens einem Monomeren aus der Gruppe der Vinylaromaten, Vinylcyanide, wie ungesättigte Nitrile, (Meth)Acrylsäure-C₁-C₈-Alkylester, ungesättigte Carbonsäuren sowie Derivate wie Anhydride und Imide ungesättigter Carbonsäuren.

Insbesondere geeignet sind (Co)Polymerisate aus
- C.1: 50 bis 99 Gew.-Teilen Vinylaromaten und/oder kernsubstituierten Vinylaromaten, wie beispielsweise Styrol, α-Methylstyrol, p-Methylstyrol, p-Chlorstyrol, und/oder Methacrylsäure-(C₁-C₄)-Alkylestern, wie z.B. Methylmethacrylat, Ethylmethacrylat, und
- C.2: 1 bis 50 Gew.-Teilen Vinylcyanide, wie ungesättigte Nitrile, beispielsweise Acrylnitril und Methacrylnitril und/oder (Meth)Acrylsäure-(C₁-C₈)-Alkylester, z.B. Methylmethacrylat, n-Butylacrylat, t-Butylacrylat, und/oder ungesättigte Carbonsäuren, wie Maleinsäure und/oder Derivate, wie Anhydride und Imide ungesättigter Carbonsäuren, wie beispielsweise Maleinsäureanhydrid und N-Phenyl-Maleinimid.

Die (Co)Polymerisate C sind harzartig, thermoplastisch und kautschukfrei.

Besonders bevorzugt sind Copolymerisate aus C.1 Styrol und C.2 Acrylnitril.

Die (Co)Polymerisate gemäß C sind bekannt und lassen sich durch radikalische Polymerisation, insbesondere durch Emulsions-, Suspensions-, Lösungs- oder Massepolymerisation herstellen. Die (Co)Polymerisate gemäß Komponente C besitzen vorzugsweise Molekulargewichte M_{w} (Gewichtsmittel, ermittelt durch Lichtstreuung oder Sedimentation) zwischen 15 000 und 200 000.

(Co)Polymerisate gemäß Komponente C entstehen häufig bei der Pfropfpolymerisation der Komponente B als Nebenprodukte, besonders dann, wenn große Mengen Monomere B.1 auf kleine Mengen Kautschuk B.2 gepfropft werden. Die gegebenenfalls erfindungsgemäß auch einzusetzende Menge an C bezieht diese Nebenprodukte der Pfropfpolymerisation von B nicht ein.

Liegt die Komponente C in den Formmassen vor, so sollte das Gewichtsverhältnis der Komponenten B:C zwischen 2:1 und 1:4, vorzugsweise zwischen 1:1 und 1:2 liegen, um fiir bestimmte Einsatzzwecke das gewünschte mechanische Werteniveau zu erreichen.

### Komponente D

Die erfindungsgemäßen Formmassen enthalten als Flammschutzmittel wenigstens eine Phosphorverbindung der Formel (I)

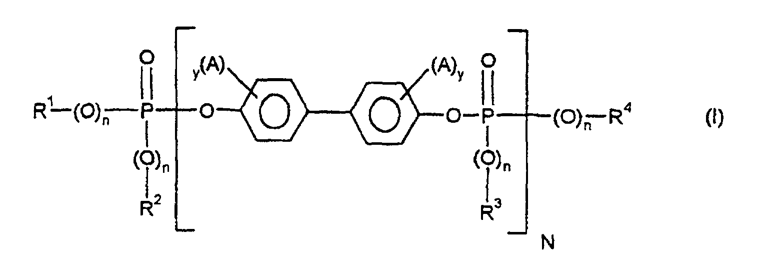

In der Formel haben die Reste R¹, R², R³, R⁴, A sowie n und y die oben angegebene Bedeutung. Die aromatischen Gruppen R¹, R², R³, R⁴ und A können ihrerseits mit Halogen- und/oder Alkylgruppen, vorzugsweise Chlor, Brom und/oder C₁-C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

N steht für Werte von 0,3 bis 30, vorzugsweise fiir einen durchschnittlichen Wert von 0,3 bis 20, besonders bevorzugt 0,5 bis 10, insbesondere 0,5 bis 6. Bei Gemischen von Phosphorverbindungen kann N die obengenannten durchschnittlichen Werte annehmen. in diesem Gemisch können Monophosphorverbindungen und/oder oligomere und/oder polymere Phosphorverbindungen enthalten sein. Im Falle von N = O beschreibt die Formel (I) Monophosphorverbindungen.

Die Komponente D kann zum Teil (höchstens bis 75 Gew%) durch wenigstens eine von Verbindungen der Formel (I) unterschiedliche Mono- und/oder Oligo- und/oder Poly-Phosphorverbindung der Formel (II) 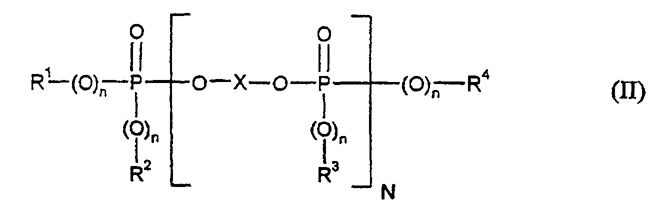 ersetzt werden, in der die Reste R¹, R², R³, R⁴, n und N die oben angegebene Bedeutung haben und

X in der Formel (II) fiir einen ein- oder mehrkernigen aromatischen Rest mit 6 bis 30 C-Atomen mit Ausnahme von Diphenyl steht. Bevorzugte Reste leiten sich von Diphenolen gemäß Formel (III) wie z. B. Bisphenol A, Resorcin oder Hydrochinon oder deren chlorierten oder bromierten Derivaten ab.

Mischungen aus Phosphorverbindungen der Formel (I), vorzugsweise mono- und/oder oligomeren Phosphaten der Formel (I), mit durchschnittlichen N-Werten von 0,5 bis 10, insbesondere 0,5 bis 6 werden als Komponente D besonders bevorzugt eingesetzt.

Vorzugsweise werden in der Mischung monomere und oligomere Phosphorverbindungen der Formel (I) so gewählt, daß eine synergistische Wirkung erzielt wird. Die Mischung besteht im allgemeinen aus 10 bis 90 Gew.-% aus oligomeren- und aus 90 bis 10 Gew.-% aus Mono-Phosphorverbindungen der Formel (I). Vorzugsweise werden die monomeren Phosphorverbindungen und/oder Mono-Phosphatverbindungen im Bereich von 12 bis 50, insbesondere von 14 bis 40, ganz besonders bevorzugt von 15 bis 40 Gew.-% mit der komplementären Menge an oligomeren Phosphatverbindungen gemischt.

Als Monophosphorverbindungen, d.h. N = O kommen Verbindungen in Frage wie Tributylphosphat, Tris-(2-chlorethyl)-phosphat, Tris-(2,3-dibrompropyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid oder Trikresylphosphinoxid.

Die Phosphorverbindungen gemäß Komponente D sind allgemein bekannte Verbindungen der organischen Chemie bzw. lassen sich nach bekannten Methoden in analoger Weise herstellen (vgl. z.B. Ullmanns Encyklopädie der Technischen Chemie, Bd. 18, S. 301 ff. 179; Houben-Weyl, Methoden der Organischen chemie, Bd. 12/1, S. 43; Beistein, Bd. 6, S. 177).

### Komponente E

Die fluorierten Polyolefine E sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser d₅₀ von 0,05 bis 1 000, vorzugsweise 0,08 bis 20 µm. Im allgemeinen haben die fluorierten Polyolefine E eine Dichte von 1,2 bis 2,3 g/cm³. Bevorzugt fluorierte Polyolefine E sind Polytetrafluorethylen, Polyvinylidenfluorid, Tetrafluorethylen (Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modem Plastics Encyclopedia", 1970-1971, Band 47, Nr. 10 A, Oktober 1970, Mc Graw-Hill, Inc., New York, Seite 134 und 774; "Modern Plastica Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wäßrigem Medium mit einem freie Radikale bildenden Katalysator, beispielseise Natrium-, Kalium- oder Ammoniumperoxidisulfat bei Drucken von 7 bis 71 kg/cm² und bei Temperaturen von 0 bis 200°C, vorzugsweise bei Temperaturen von 20 bis 100°C. (Nähere Einzelheiten s. z. B. US-Patent 2 393 967). Je nach Einsatzform kann die Dichte dieser Materialien zwischen 1,2 und 2,3 g/cm³, die mittlere Teilchengröße zwischen 0,5 und 1 000 µm liegen.

Erfindungsgemäß bevorzugte fluorierte Polyolefine E sind Tetrafluorethylenpolymerisate mit mittleren Teilchendurchmesser von 0,05 bis 20 µm, vorzugsweise 0,08 bis 10 µm, und eine Dichte von 1,2 bis 1,9 g/cm³ und werden vorzugsweise in Form einer koagulierten Mischung von Emulsionen der Tetrafluorethylenpolymerisate E mit Emulsionen der Pfropfpolymerisate B eingesetzt.

Geeignete, in Pulverform einsetzbare fluorierte Polyolefine E sind Tetrafluorethylenpolymerisate mit mittleren Teilchendurchmesser von 100 bis 1 000 µm und Dichten von 2,0 g/cm³ bis 2,3 g/cm³.

Zur Herstellung einer koagulierten Mischung aus B und E wird zuerst eine wäßrige Emulsion (Latex) eines Pfropfpolymerisates B mit einer feinteiligen Emulsion eines fluorierten Polyolefins E vermischt; geeignete Emulsionen von fluorierten Polyolefinen besitzen üblicherweise Feststoffgehalte von 30 bis 70 Gew-.%, insbesondere von 50 bis 60 Gew.-%, vorzugsweise von 30 bis 35 Gew.-%.

Die Mengenangabe bei der Beschreibung der Komponente B schließt den Anteil des Pfropfpolymerisats für die koagulierte Mischung aus Pfropfpolymerisat und fluoriertem Polyolefinen nicht ein.

In der Emulsionsmischung liegt das Gleichgewichtsverhältnis Pfropfpolymerisat B zum fluorierten Polyolefin E bei 95:5 bis 60:40. Die Emulsionsmischung wird in bekannter Wiese koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handlsübliche Produkte und werden beispielsweise von der Firma DuPont als Teflon 30 N angeboten.

Die erfindungsgemäßen Formmassen können wenigstens eines der üblichen Additive, wie Gleit- und Entformungsmittel, Nukleiermittel, Antistatika, Stabilisatoren sowie Farbstoffe, Pigmente und/oder Verstärkungsmaterialien enthalten. Als anorganische Verstärkungsmaterialien kommen Glasfasern, ggf. geschnitten oder gemahlen, Glasperlen, Glaskugeln, blättchenförmiges Verstärkungsmaterial, wie Kaolin, Talk, Glimmer, Mika, Kohlefasern in Frage. Vorzugsweise werden als Verstärkungsmaterial geschnittene oder gemahlene Glasfasern, vorzugsweise mit einer Länge von 1 bis 10 mm und einem Durchmesser von <20µm in einer Menge von 1 bis 40 Gew.-Teilen eingesetzt; vorzugsweise sind die Glasfasern oberflächenbehandelt.

Die erfindungsgemäßen Formmassen können darüberhinaus wenigstens eine polare Verbindung wenigstens eines der Metalle der 1. bis 5. Hauptgruppe oder der 1. bis 8. Nebengruppe des Periodensystems mit mindestens einem Element ausgewählt aus der Gruppe von Sauerstoff, Schwefel, Bor, Kohlenstoff, Phosphor, Stickstoff, Wasserstoff und Silizium als feinstverteiltes anorganisches Pulver enthalten. Vorzugsweise werden als polare Verbindung ein Oxid oder Hydroxid, vorzugsweise TiO₂, SiO₂, SnO₂, ZnO, Böhmit, ZrO₂, Al₂O₃, Eisenoxide, deren Mischungen und dotierte Verbindungen, besonders bevorzugt Böhmit oder TiO_{2,} mit einem durchschnittlichen Teilchendurchmesser von <200 nm, vorzugsweise 0,1 - 100 nm, besonders bevorzugt 1 - 50 nm, eingesetzt.

Die erfindungsgemäßen Formmassen können ein oder mehrere weitere, gegebenenfalls synergistisch wirkenden Flammschutzmittel enthalten. Beispielhaft werden als weitere Flammschutzmittel organische Halogenverbindugen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen, wie Antimonoxide, Bariummetaborat, Hydroxoantimonat, Zirkonoxid, Zirkonhydroxid, Molybdenoxid, Ammoniummolybdat, Zinkborat, Ammoniumborat und Zinnoxid sowie Siloxanverbindungen genannt. Diese Flammschutzmittel werden im allgemeinen in einer Menge bis zu 20 Gew.-% (bezogen auf die Gesamt-Formmasse) zugesetzt.

Die erfindungsgemäßen Formmassen enthaltend die Komponenten A bis E und gegebenenfalls weiteren bekannten Zusätzen wie Stabilisatoren, Farbstoffen, Pigmenten, Gleit- und Entformungsmitteln, Nukleiermittel, Nanopartikel sowie Antistatika und Verstärkungsmaterialien und Flammschutzmittel, werden hergestellt, indem man die jeweiligen Bestandteile in bekannter Weise vermischt und bei Temperatuern von 200°C bis 300°C in üblichen Aggregaten wie Innenknetern, Extrudern und Doppelwellenschnecken schmelzcompoundiert und schmelzextrudiert, wobei die Komponente E vorzugsweise in Form der bereits erwähnten koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele fiir herstellbare Formkörper sind: Gehäuseteile jeder Art, z. B. fiir Haushaltsgeräte wie Saftpressen, Kaffeemaschinen, Mixer, für Büromaschinen wie Monitore, Drucker, Kopierer oder Abdeckplatten für den Bausektor und Teile fiir den Kfz-Sektor. Sie werden außerdem auf dem Gebiet der Elektrotechnik eingesetzt, weil sie sehr gute elektrische Eigenschaften haben.

Besonders geeignet sind die Formmassen zur Herstellung von Formteilen, wo besonders hohe Ansprüche an die Wärmeformbeständigkeit der eingesetzten Kunststoffe gestellt werden.

Eine weitere Form der Verarbeitung ist die Herstellung von Formkörpern durch Tiefziehen aus vorher hergestellten Platten oder Folien.

Ein weiterer Gegenstand der vorliegenden Erfindung ist daher auch die Verwendung der erfindungsgemäßen Formmassen zur Herstellung von Formkörpern jeglicher Art, vorzugsweise der oben genannten, sowie die Formkörper aus den erfindungsgemäßen Formmassen.

### Beispiele

### Komponente A

Lineares Polycarbonat auf Basis Bisphenol A mit einer relativen Lösungsviskosität von 1,252, gemessen in CH₂Cl₂ als Lösungsmittel bei 25°C in einer Konzentration von 0,5 g/100 ml.

### Komponente B

Pfropfpolymerisat von 45 Gew.-Teilen eines Copolymerisats aus Styrol und Acrylnitril im Gewichtsverhältnis von 72:28 auf 55 Gew.-Teile teilchenförmigen vernetzten Polybutadienkautschuk (mittlerer Teilchendurchmesser d₅₀ = 0,4 µm), hergestellt durch Emulsionspolymerisation.

### Komponente C

Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

### Komponente D

D 1 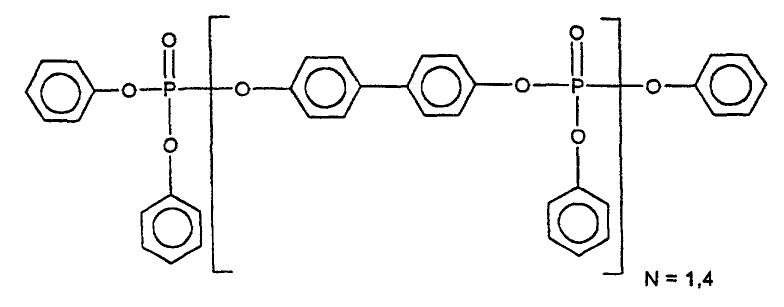
D 2 als Vergleich

Fyrolflex RDP® der Firma Akzo auf Basis m-Phenylens-bis(diphenyl)-phoshat.

### Komponente E

Tetrafluorethylenpolymerisat als koagulierte Mischung aus einer SAN-Pfropfpolymerisat-Emulsion gemäß Komponente C) in Wasser und einer Tetrafluorethylenpolymerisat-Emulsion in Wasser. Das Gewichtsverhältnis Pfropfpolymerisat C) zum Tetrafluorethylenpolymerisat E) in der Mischung ist 90 Gew.-% zu 10 Gew.-%. Die Tetrafluorethylenpolyermisat-Emulsion besitzt einen Feststoffgehalt von 60 Gew.-%, der mittlere Teilchendurchmesser liegt zwischen 0,05 und 0,5 µm. Die SAN-Pfropfpolymerisat-Emulsion besitzt einen Feststoffgehalt von 34 Gew.-% und einen mittleren Latexteilchendurchmesser von 0,4 µm.

### Herstellung von E

Die Emulsion des Tetrafluorethylenpolymerisats (Teflon 30 N der Fa. DuPont) wird mit der Emulsion des SAN-Pfropfpolymerisats C vermischt und mit 1,8 Gew.-%, bezogen auf Polymerfeststoff, phenolischer Antioxidantien stabilisiert. Bei 85 bis 95°C wird die Mischung mit einer wäßrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

### Herstellung und Prüfung der erfindungsgemäßen Formmassen

Das Mischen der Komponenten A bis E erfolgt auf einem 3-I-Innenkneter. Die Formkörper werden auf einer Spritzgießmaschine Typ Arburg 270 E bei 260°C hergestellt.

Die Bestimmung der Kerbschlagzähigkeit erfolgt nach Methode ISO 180 1A an Stäben der Abmessung 80 x 10 x 4 mm³ bei Raumtemperatur.

Die Bestimmung der Wärmeformbeständigkeit nach Vicat B erfolgt gemäß DIN 53 460.

Das Spannungsrißverhalten wird an Stäben der Abmessung 80 x 10 x 4 mm³, Massetemperatur 260°C, untersucht. Als Testmedium wird eine Mischung aus 60 Vol.-% Toluol und 40 Vol.-% Isopropanol verwendet. Die Probekörper werden mittels einer Kreisbogenschablone vorgedehnt und 5 min bzw. 10 min bei Zimmertemperatur im Testmedium simultan gelagert. Die Vordehnung δₓ beträgt 0,2 - 2,4 %. Das Spannungsrißverhalten wird über die Rißbildung bzw. den Bruch in Abhängigkeit der Vordehnung beurteilt.

Die Zusammensetzung der geprüften Materialien sowie die erhaltenen Daten sind in der folgenden Tabelle zusammengefaßt.

**Tabelle 1:**

| Zusammensetzung und Eigenschaften der Polycarbonat-ABS-Formmassen | | | |
|---|---|---|---|
| Beispiel | 1 Vergleich | 2 | 3 |
| Komponenten [Gew.-Teile] | | | |
| A | 66,7 | 66,7 | 66,7 |
| B | 7,3 | 7,3 | 7,3 |
| C | 9,4 | 9,4 | 9,4 |
| D 1 | - | 12,0 | 14,0 |
| D 2 | 12,0 | - | - |
| E | 4,2 | 4,2 | 4,2 |
| Entformungsmittel | 0,4 | 0,4 | 0,4 |

| Eigenschaften: | | | |
|---|---|---|---|
| | | | |
| Vicat B 120 [°C] | 94 | 115 | 112 |
| | | | |
| Kerbschlagzähigkeit [kJ/m²] | 42 | 59 | 60 |
| | | | |
| ESC-Verhalten | | | |
| 10min/2,4% | | | kein Bruch |
| 5min/2,4% | | BR 5:00 | |
| 5min/1,6% | BR 5:00 | | |

Aus der Tabelle geht hervor, daß die erfindungsgemäßen Formmassen eine sehr gute Eigenschaftskombination der mechanischen Eigenschaften, insbesondere eine Verbesserung der Spannungsrißbeständigkeit, Kerbschlagzähigkeit und der Wärmeformbeständigkeit zeigen.

## Patentansprüche

1. Flammwidrige thermoplastische Formmassen enthaltend
A. 5 bis 95 Gew.-Teile aromatisches Polycarbonat oder Polyestercarbonat
B. 1 bis 60 Gew.-Teile Pfropfpolymerisat von
B.1 5 bis 95 Gew.-% einem oder mehreren Vinylmonomeren auf
B.2 5 bis 95 Gew.-% einen oder mehrere Pfropfgrundlagen mit einer Glasumwandlungstemperatur < 10°C und einer mittleren Teilchengröße (d₅₀-Wert) von 0,05 bis 5 µm,
C. 0 bis 50 Gew.-Teile thermoplastisches Vinyl(co)polymerisat,
D. 0,5 bis 20 Gew.-Teile Phosphorverbindung der allgemeinen Formel (I) 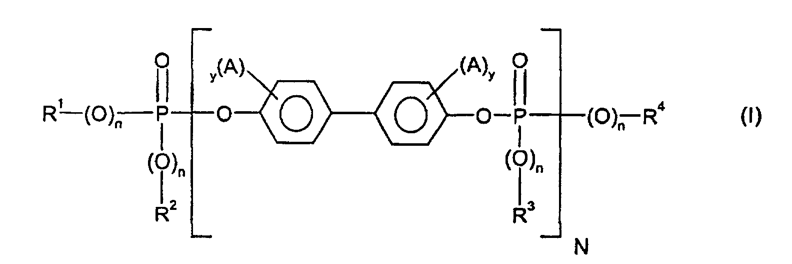 worin
A unabhängig voneinander, Halogen, C₁-C₈-Alkyl, C₆-C₁₀-Aryl, C₇-C₁₂-Aralkyl,
R¹, R², R³ und R⁴, unabhängig voneinander gegebenenfalls halogeniertes C₁-C₈-Alkyl, jeweils gegebenenfalls durch Halogen und/oder C₁-C₄-Alkyl substituiertes C₅-C₆-Cycloalkyl, C₆-C₂₀-Aryl oder C₇-C₁₂-Aralkyl,
y jeweils unabhängig voneinander 0, 1, 2, 3 oder 4
n unabhängig voneinander 0 oder 1,
N 0,3 bis 30 bedeuten
und gegebenenfalls eine oder mehrere weitere Verbindung(en) der Formel (II) 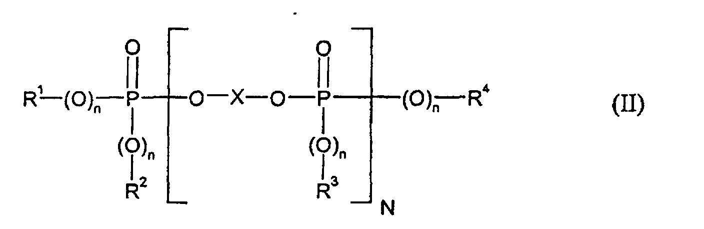 in der die Reste R¹, R², R³, R⁴, n und N die oben angegebene Bedeutung haben und
X in der Formel (II) für einen ein- oder mehrkernigen aromatischen Rest mit 6 bis 30 C-Atomen mit Ausnahme von Diphenyl steht.
E. 0,05 bis 5 Gew.-Teile fluoriertes Polyolefin,
wobei die Summe der Gew.-Teile aller Formmassenkomponenten 100 ergibt.

2. Formmassen nach Anspruch 1, wobei die Phosphorverbindungen der Formel (I) ein durchschnittliches N von 0,3 bis 20 aufweist.

3. Formmassen nach einem der Ansprüche 1 und 2, wobei der Pfropfgrad G des Pfropfpolymerisats B von 0,15 bis 0,55 beträgt.

4. Formmassen nach einem der Ansprüche 1 bis 3, wobei in Formel (I) bzw. Formel (II) R₁ bis R₄ jeweils unabhängig voneinander C₁-C₄-Alkyl, jeweils gegebenenfalls mit Halogen- und/oder Alkyl substituiertes C₆-C₁₀-Aryl oder C₇-C₁₂-Aralkyl bedeutet und X sich von aromatischen Diphenolen, vorzugsweise Bisphenol A, Resorcin oder Hydrochinon mit Ausnahme von Diphenyl, welche. gegebenenfalls chloriert, bromiert und/oder alkyliert sein können, ableitet.

5. Formmassen nach einem der Ansprüche 1 bis 4, wobei Phosphorverbindung der Formel (II) Tributylphosphat, Tris-(2-chlorethyl)-phosphat, Tris-(2,3-dibrompropyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid oder Trikresylphosphinoxid sind.

6. Formmassen nach einem der Ansprüche 1 bis 5, wobei die Phosphorverbindungen der Formel (I) und gegebenenfalls (II) ein Gemisch von Phosphorverbindungen mit durchschnittlichen Werten für N von 0,5 bis 10 sind.

7. Formmassen nach einem der Ansprüche 1 bis 6, wobei die fluorierten Polyolefine E hochmolekulare Polymere mit Fluorgehalten von 65 bis 76 Gew.-%, mittleren Teilchendurchmesser d₅₀ von 0,08 bis 20 µm und einer Dichte von 1,2 bis 2,3 g/cm³ sind.

8. Formmassen nach Ansprüchen 1 bis 7, die 0,01 bis 35 Gew.-%, bezogen auf die Gesamtformmasse, wenigstens eines weiteren Flammschutzmittels enthalten.

9. Formmassen nach einem der Ansprüche 1 bis 8 enthaltend 10 bis 90 Gew.-Teile der Komponente A) 1 bis 40 Gew.-Teile der Komponente B und 1 bis 18 Gew.-Teile der Komponente D.

10. Formmassen nach einem der Ansprüche 1 bis 9 enthaltend 20 bis 80 Gew.-Teile der Komponente A, 2 bis 30 Gew.-Teile der Komponente B und 2 bis 15 Gew.-Teile der Komponente D.

11. Formmassen nach einem der Ansprüche 1 bis 10, wobei die Pfropfgrundlage B.2 ein Dienkautschuk, Acrylatkautschuk, Silikonkautschuk oder Ethylen-Propylen-Dien-Kautschuk ist.

12. Formmassen nach einem der Ansprüche 1 bis 11, enthaltend eine Verbindung der 1. bis 5. Hauptgruppe oder der 1. bis 8. Nebengruppe des Periodensystems mit mindestens einem Element ausgewählt aus der Gruppe von Sauerstoff, Schwefel, Bor, Kohlenstoff, Phosphor, Stickstoff, Wasserstoff und Silizium mit einem durchschnittlichen Teilchendurchmesser von <200 nm.

13. Formmassen nach einem der Ansprüche 1 bis 12, welche mindestens einen Zusatz aus der Gruppe der Stabilisatoren, Pigmente, Entformungsmittel, Fließhilfsmittel, anorganische Verstärkungsmaterialien, Nanopartikeln und/oder Antistatika enthalten.

14. Verwendung der Formmassen nach einem der Ansprüche 1 bis 13 zur Herstellung von Formkörpern.

15. Formkörper, hergestellt aus Formmassen nach einem der Ansprüche 1 bis 13.

## Claims

1. Flame-resistant thermoplastic moulding compositions containing
A. 5 to 95 parts by weight of aromatic polycarbonate or polyester carbonate
B. 1 to 60 parts by weight of graft polymer comprising
B.1 5 to 95 wt.% of one or more vinyl monomers on
B.2 5 to 95 wt.% of one or more graft bases with a glass transition temperature < 10°C and an average particle size (d₅₀ value) of 0.05 to 5 µm,
C. 0 to 50 parts by weight of thermoplastic vinyl (co)polymer,
D. 0.5 to 20 parts by weight of phosphorus compound having the general formula (I) 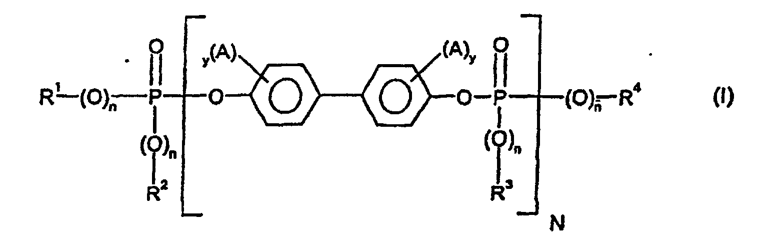 wherein
A mutually independently denotes halogen, C₁-C₈ alkyl, C₆-C₁₀ aryl, C₇-C₁₂ aralkyl,
R¹, R², R³ and R⁴ mutually independently denote optionally halogenated C₁-C₈ alkyl, C₅-C₆ cycloalkyl, C₆-C₂₀ aryl or C₇-C₁₂ aralkyl, each optionally substituted by halogen and/or C₁-C₄ alkyl,
y in each case mutually independently denotes 0, 1, 2, 3 or 4
n mutually independently denotes 0 or 1,
N denotes 0.3 to 30
and optionally one or more further compound(s) having the formula (II) 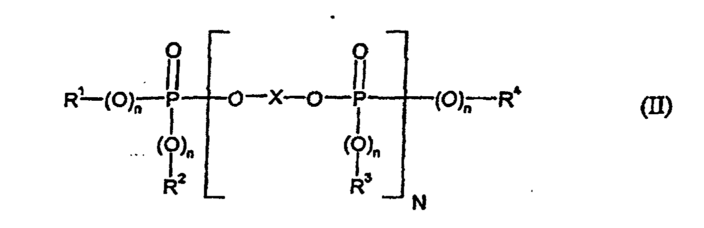 in which the radicals R¹, R², R³, R⁴, n and N have the meaning stated above and
X in formula (II) stands for a mononuclear or polynuclear aromatic radical with 6 to 30 C atoms with the exception of diphenyl.
E. 0.05 to 5 parts by weight of fluorinated polyolefin,
whereby the sum of the parts by weight of all moulding composition components is 100.

2. Moulding compositions according to claim 1, whereby the phosphorus compounds having formula (I) display an average N of 0.3 to 20.

3. Moulding compositions according to one of claims 1 and 2, whereby the degree of grafting G of the graft polymer B is from 0.15 to 0.55.

4. Moulding compositions according to one of claims 1 to 3, whereby in formula (I) or (II) R¹ to R⁴ each mutually independently denotes C₁-C₄ alkyl, or C₆-C₁₀ aryl or C₇-C₁₂ aralkyl, each optionally substituted by halogen and/or alkyl, and X is derived from aromatic diphenols, preferably bisphenol A, resorcinol or hydroquinone with the exception of diphenyl, which can optionally be chlorinated, brominated and/or alkylated.

5. Moulding compositions according to one of claims 1 to 4, whereby phosphorus compounds having formula (II) are tributyl phosphate, tris(2-chloroethyl) phosphate, tris(2,3-dibromopropyl) phosphate, triphenyl phosphate, tricresyl phosphate, diphenyl cresyl phosphate, diphenyl octyl phosphate, diphenyl-2-ethylcresyl phosphate, tri(isopropylphenyl) phosphate, halogen-substituted aryl phosphates, methyl phosphonic acid dimethyl ester, methyl phosphonic acid diphenyl ester, phenyl phosphonic acid diethyl ester, triphenyl phosphine oxide or tricresyl phosphine oxide.

6. Moulding compositions according to one of claims 1 to 5, whereby the phosphorus compounds having formula (I) and optionally (II) are a mixture of phosphorus compounds with average values for N of 0.5 to 10.

7. Moulding compositions according to one of claims 1 to 6, whereby the fluorinated polyolefins E are high-molecular polymers with fluorine contents of 65 to 76 wt.%, average particle diameters d₅₀ of 0.08 to 20 µm and a density of 1.2 to 2.3 g/cm³.

8. Moulding compositions according to claims 1 to 7, containing 0.01 to 35 wt.%, relative to the entire moulding composition, of at least one further flame retardant.

9. Moulding compositions according to one of claims 1 to 8, containing 10 to 90 parts by weight of component A, 1 to 40 parts by weight of component B and 1 to 18 parts by weight of component D.

10. Moulding compositions according to one of claims 1 to 9, containing 20 to 80 parts by weight of component A, 2 to 30 parts by weight of component B and 2 to 15 parts by weight of component D.

11. Moulding compositions according to one of claims 1 to 10, whereby the graft base B.2 is a diene rubber, acrylate rubber, silicone rubber or ethylene-propylene-diene rubber.

12. Moulding compositions according to one of claims 1 to 11, containing a compound from the 1st to 5th main group or the 1st to 8th subgroup of the periodic system with at least one element selected from the group of oxygen, sulfur, boron, carbon, phosphorus, nitrogen, hydrogen and silicon, with an average particle diameter of <200 nm.

13. Moulding compositions according to one of claims 1 to 12, containing at least one additive from the group of stabilisers, pigments, mould release agents, flow control agents, inorganic reinforcing agents, nanoparticles and/or antistatics.

14. Use of the moulding compositions according to one of claims 1 to 13 in the production of moulded parts.

15. Moulded parts produced from moulding compositions according to one of claims 1 to 13.

## Revendications

1. Matières à mouler thermoplastiques résistantes à la flamme contenant
A. 5 à 95 parties en poids de polycarbonate ou polyestercarbonate aromatique,
B. 1 à 60 parties en poids de polymère greffé de
B.1 5 à 95% en poids d'un ou de plusieurs monomères vinyliques
B.2 5 à 95% en poids d'une ou de plusieurs bases de greffage avec une température de transition vitreuse <10°C et une grosseur de particules moyenne (valeur d₅₀) de 0,05 à 5 µm,
C. 0 à 50 parties en poids d'un (co)polymère vinylique thermoplastique,
D. 0,5 à 20 parties en poids d'un composé phosphoré de formule générale (I) 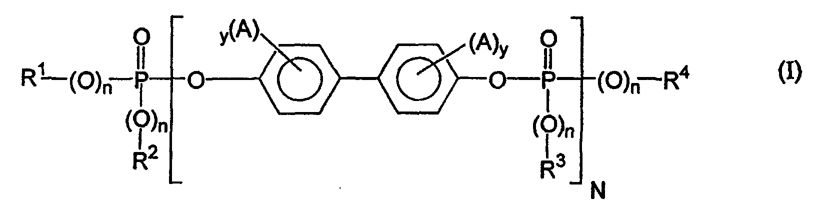 dans laquelle
A est indépendamment l'un de l'autre un halogène, un radical alkyle en C₁-C₈, aryle en C₆-C₁₀, aralkyle en C₇-C₁₂,
R¹, R², R³ et R⁴ sont indépendamment l'un de l'autre un radical alkyle en C₁-C₈ éventuellement halogéné, un radical cycloalkyle en C₅-C₆, aryle en C₆-C₂₀ ou aralkyle en C₇-C₁₂ substitué chaque fois éventuellement par un halogène et/ou un radical alkyle en C₁-C₄,
y vaut chaque fois indépendamment l'un de l'autre, 0, 1, 2, 3 ou 4,
n vaut chaque fois indépendamment l'un de l'autre 0 ou 1,
N vaut 0,3 à 30,
et éventuellement un ou plusieurs autre(s) composé(s) de formule (II) 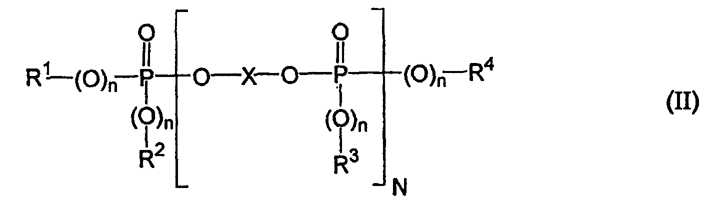 dans laquelle les radicaux R¹, R², R³, R⁴, n et N ont la signification donnée ci-dessus et
X dans la formule (II) est un radical aromatique à un ou plusieurs noyaux avec 6 à 30 atomes de carbone à l'exception du radical diphényle,
E. 0,05 à 5 parties en poids d'une polyoléfine fluorée,
la somme des parties en poids de tous les composants des matières à mouler étant de 100.

2. Matières à mouler selon la revendication 1, dans lesquelles les composés phosphorés de formule (I) ont un N moyen de 0,3 à 20.

3. Matières à mouler selon les revendications 1 et 2, dans lesquelles le degré de greffage G du polymère greffé B est de 0,15 à 0,55.

4. Matières à mouler selon les revendications 1 à 3, dans lesquelles dans la formule (I), respectivement la formule (II), R₁ à R₄ sont chaque fois indépendamment l'un de l'autre un radical alkyle en C₁-C₄, aryle en C₆-C₂₀ ou aralkyle en C₇-C₁₂ substitué chaque fois éventuellement par un halogène et/ou un radical alkyle, et X dérive de diphénols aromatiques, de préférence le bisphénol A, la résorcine ou l'hydroquinone à l'exception du diphényle, qui peut être éventuellement chloré, bromé et/ou alkylé.

5. Matières à mouler selon l'une des revendications 1 à 4, dans lesquelles le composé phosphoré de formule (II) est le tributylphosphate, le tris-(2-chloroéthyl)-phosphate, le tris-(2,3-dibromopropyl)-phosphate, le triphénylphosphate, le tricrésylphosphate, le diphénylcrésylphosphate, le diphényloctyphosphate, le diphényl-2-éthylcrésylphosphate, le tri(isopropylphényl)-phosphate, l'arylphosphate halogénosubstitué, l'ester diméthylique de l'acide méthylphosphonique, l'ester diphénylique de l'acide méthylphosphonique, l'ester diéthylique de l'acide phénylphosphonique, l'oxyde de triphénylphosphine ou l'oxyde de tricrésylphosphine.

6. Matières à mouler selon l'une des revendications 1 à 5, dans lesquelles les composés phosphorés de formule (I) et éventuellement (II) sont un mélange de composés phosphorés avec des valeurs moyennes de N de 0,5 à 10.

7. Matières à mouler selon l'une des revendications 1 à 6, dans lesquelles les polyoléfines fluorées E sont des polymères de masse moléculaire élevée avec des quantités en fluor de 65 à 76% en poids, des diamètres de particules moyens d₅₀ de 0,08 à 20 µm et une densité de 1,2 à 2,3 g/cm³.

8. Matières à mouler selon les revendications 1 à 7, qui contiennent 0,01 à 35% en poids, rapporté à la masse à mouler totale, d'au moins un autre agent de résistance à la flamme.

9. Matières à mouler selon l'une des revendications 1 à 8 contenant 10 à 90 parties en poids des composants A), 1 à 40 parties en poids des composants B et 1 à 18 parties en poids du composant D.

10. Matières à mouler selon l'une des revendications 1 à 9 contenant 20 à 80 parties en poids des composants A, 2 à 30 parties en poids des composants B et 2 à 15 parties en poids des composants D.

11. Matières à mouler selon l'une des revendications 1 à 10, dans lesquelles la base de greffage B.2 est un caoutchouc diénique, un caoutchouc acrylate, un caoutchouc de silicone ou un caoutchouc éthylène-propylène-diène.

12. Matières à mouler selon les revendications 1 à 11, contenant un composé des groupes principaux 1 à 5 ou des groupes secondaires 1 à 8 du système périodique avec au moins un élément choisi dans le groupe de l'oxygène, le soufre, le bore, le carbone, le phosphore, l'azote, l'hydrogène et le silicium avec un diamètre de particules moyen <200 nm.

13. Matières à mouler selon l'une des revendications 1 à 12, qui contient un additif du groupe des stabilisants, pigments, agents de démoulage, auxiliaires d'écoulement, matières de renforcement minérales, nano-particules et/ou agents antistatiques.

14. Utilisation des matières à mouler selon les revendications 1 à 13 pour la préparation de corps moulés.

15. Corps moulé, préparé à partir des matières à mouler selon l'une des revendications 1 à 13.
